# EUROPEAN PATENT APPLICATION

(11) **EP 4 579 232 A1**
(43) Date of publication of application: **02.07.2025**
(21) Application number: 24223890.5
(22) Date of filing: 31.12.2024
(51) Int. Cl.: G01N 27/9013

(54) **NON-DESTRUCTIVE TESTING ON ENHANCED NON-FERROMAGNETIC HEAT EXCHANGER TUBING INSTALLED IN FLUID-COOLED CLIMATE PRODUCTS**

(30) Priority: 28.12.2023 US 202318399048
(71) Applicant: Trane International Inc., Davidson, NC 28036 (US)
(72) Inventor: AUGUSTINE, Paul, Davidson, North Carolina, 28036 (US); TUCKER, Justin, Davidson, North Carolina, 28036 (US); SIMPSON, Matthew, Davidson, North Carolina, 28036 (US); KROELLS, Colton, Davidson, North Carolina, 28036 (US); MOE, Thomas, Davidson, North Carolina, 28036 (US); GAYNOR, Nicholas, Davidson, North Carolina, 28036 (US)
(74) Representative: Haseltine Lake Kempner LLP

(57) **Abstract**

A test probe inserted in a specific heat exchanger tube is used to produce test data of non-destructive testing of the specific heat exchanger tube. The test data of the non-destructive testing of the specific heat exchanger tube is accessed. A structural health assessment of the specific heat exchanger tube is determined, using the accessed test data of the non-destructive testing of the specific heat exchanger tube in comparison to calibration data from testing of at least one calibration standard heat exchanger tube that is more closely related to the specific heat exchanger tube than to a generic tube.

## Description

### TECHNICAL FIELD

The present disclosure relates generally to testing and diagnostics for refrigerant system or heat exchanger tubes.

### BACKGROUND

Heat exchanger tubes or tubing, used in refrigerant systems, HVAC (heating, ventilation, air conditioning) systems, fluid-cooled chillers, typically water-cooled chillers, and related industrial applications, etc., may have or develop defects that decrease heat exchange capability, decrease efficiency, or cause system failure. Testing in the factory and testing in the field may reveal defects, but are time-consuming, require technical expertise and may be delay and error-prone. There is an ongoing need for technological improvements in testing and diagnostics for refrigerant system or heat exchanger tubes, and it is in this environment that present embodiments arise.

### SUMMARY

The present disclosure includes, without limitation, the following examples.

One embodiment is a method for non-destructive testing of heat exchanger tubing. The method includes using a test probe inserted in a specific heat exchanger tube with machine -controlled testing, producing test data of non-destructive testing of the specific heat exchanger tube. The method includes accessing the test data of the non-destructive testing of the specific heat exchanger tube. The method includes determining a structural health assessment of the specific heat exchanger tube using the accessed test data of the non-destructive testing of the specific heat exchanger tube in comparison to calibration data associated with at least one calibration standard heat exchanger tube that is more closely related to the specific heat exchanger tube than to a generic tube, in terms of its structural characteristics.

One embodiment is a tangible, non-transitory, computer-readable having instructions thereupon, which when executed by a processor, cause the processor to perform a method. Test data and calibration data are being used for health assessment of heat exchanger tubes. The method includes receiving test data of non-destructive testing of the specific heat exchanger tube, produced using a test probe inserted in the specific heat exchanger tube with machine -controlled testing. The method includes storing, in a data storage, the test data of the non-destructive testing of the specific heat exchanger tube. The method includes receiving calibration data associated with at least one calibration standard heat exchanger tube that is more closely related to the specific heat exchanger tube than to a generic tube, in terms of its structural characteristics. The method includes storing the calibration data from the testing of the at least one calibration standard heat exchanger tube. The method includes supporting accessing the test data of the non-destructive testing of the specific heat exchanger tube in the data storage and the calibration data from the testing of the at least one calibration standard heat exchanger tube, to enable a structural health assessment of the specific heat exchanger tube based on the test data and the calibration data.

One embodiment is a system for non-destructive testing of heat exchanger tubing. The system is to provide test data and calibration data used in health assessment of heat exchanger tubes. The system includes at least one memory and at least one processor coupled to the at least one memory. The at least one processor is arranged to receive test data of non-destructive testing of a specific heat exchanger tube produced using a test probe inserted in the specific heat exchanger tube. The at least one processor is arranged to store the test data of the non-destructive testing of the specific heat exchanger tube in a data storage. The at least one processor is arranged to store calibration data from testing of at least one calibration standard heat exchanger tube that is more closely related to the specific heat exchanger tube than to a generic tube, in terms of its structural characteristics. The at least one processor is arranged to support accessing the test data of the non-destructive testing of the specific heat exchanger tube in the data storage and the calibration data from the testing of the at least one calibration standard heat exchanger tube, to enable a structural health assessment of the specific heat exchanger tube based on the test data and the calibration data.

These and other features, aspects, and advantages of the disclosure will be apparent from a reading of the following detailed description together with the accompanying drawings, which are briefly described below. The disclosure includes any combination of two, three, four, or more of the above-noted embodiments, examples, or implementations as well as combinations of any two, three, four, or more features or elements set forth in this disclosure, regardless of whether such features or elements are expressly combined in a specific example description herein. This disclosure is intended to be read holistically such that any separable features or elements of the disclosed disclosure, in any of its various aspects, embodiments, examples, or implementations, should be viewed as intended to be combinable unless the context clearly dictates otherwise.

### BRIEF DESCRIPTION OF THE DRAWINGS

The described embodiments and the advantages thereof may best be understood by reference to the following description taken in conjunction with the accompanying drawings. These drawings in no way limit any changes in form and detail that may be made to the described embodiments by one skilled in the art without departing from the spirit and scope of the described embodiments.
Fig. 1 illustrates an embodiment of a system, and embodiments of components of a system, for non-destructive testing of heat exchanger tubing.
Fig. 2A illustrates aspects of non-destructive testing of heat exchanger tubing, for embodiments.
Fig. 2B illustrates a process diagram showing the role of test data from non-destructive testing of specific heat exchanger tubes and calibration data from non-destructive testing of calibration standard heat exchanger tube(s), for various embodiments, including Fig. 2A.
Fig. 3 illustrates a flow diagram of a method for non-destructive testing of heat exchanger tubing, in an embodiment.
Fig. 4A illustrates an example of bobbin coil data.
Fig. 4B illustrates an example of array probe data and bobbin coil data.
Figs. 5A, 5B, 5C, and 5D illustrate examples of heat exchanger tubing and probes, suitable for embodiments.

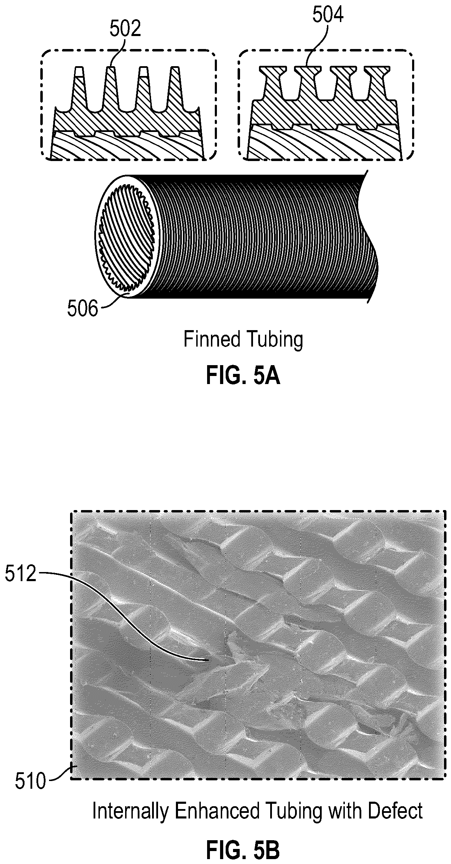

Fig. 5A illustrates finned tubing.
Fig. 5B illustrates internally enhanced tubing with defect.

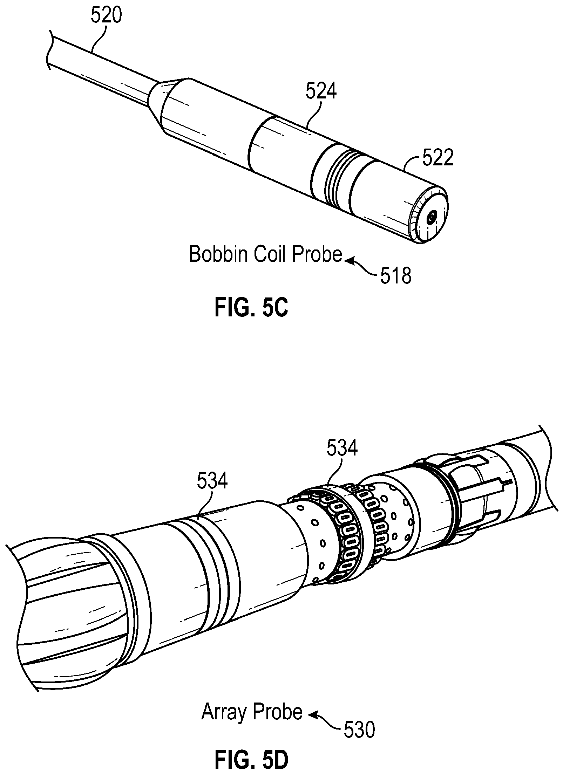

Fig. 5C illustrates a bobbin coil probe.
Fig. 5D illustrates an array probe.

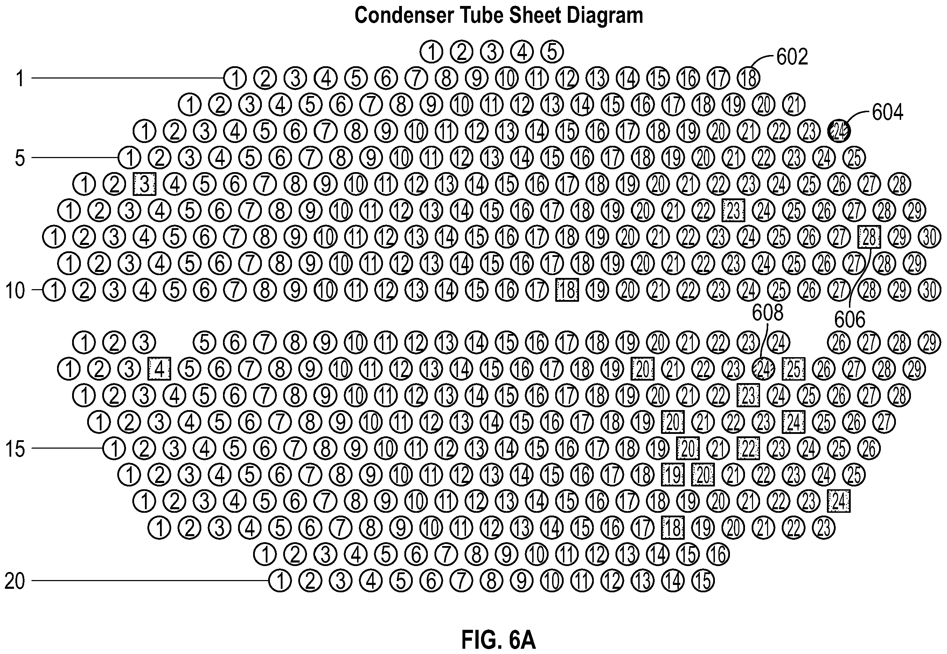

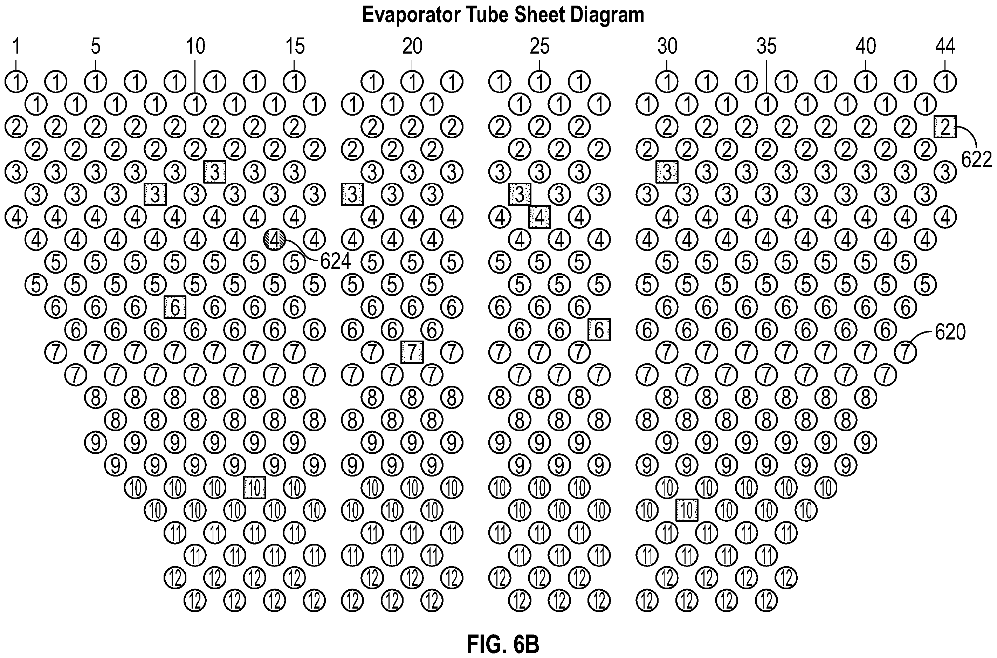

Figs. 6A and 6B illustrate tube sheet diagrams of a condenser tube sheet and an evaporator tube sheet, showing locations of heat exchanger tubes in an example installation.
Fig. 6A illustrates a tube sheet diagram of a condenser tube sheet.
Fig. 6B illustrates a tube sheet diagram of an evaporator tube sheet.

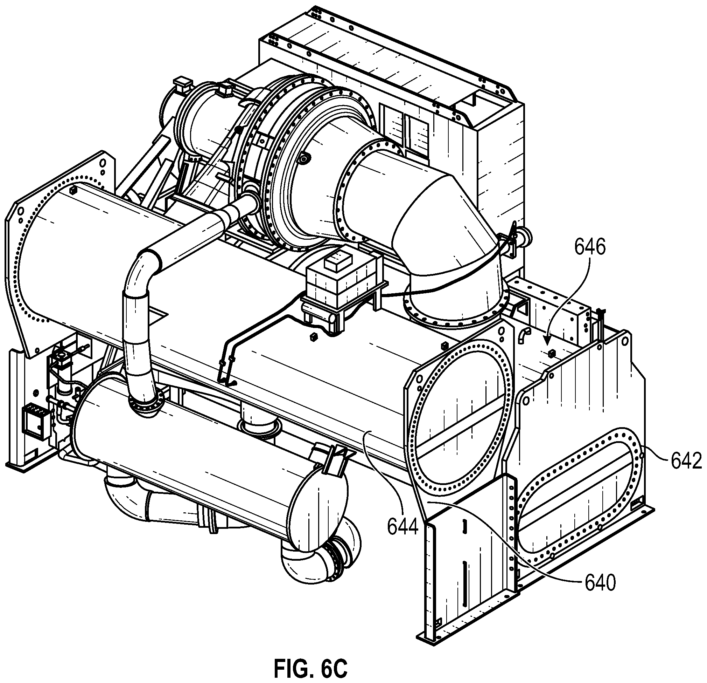

Fig. 6C illustrates a perspective view of an example chiller, showing a condenser tube sheet and an evaporator tube sheet, to which heat exchanger tubes are located in situ in the apparatus, as suitable for embodiments.

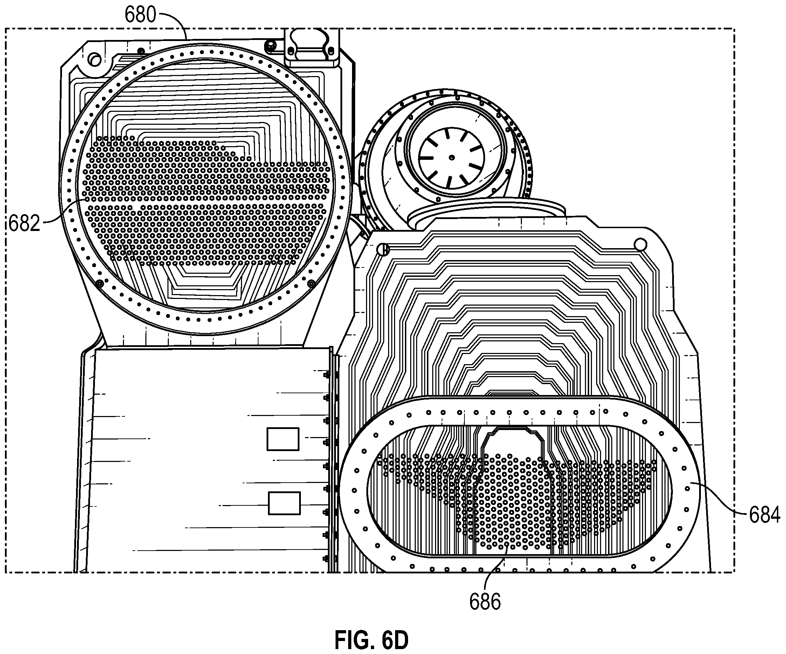

Fig. 6D illustrates an end view of an example chiller, showing a condenser tube sheet and an evaporator tube sheet, as suitable for embodiments.

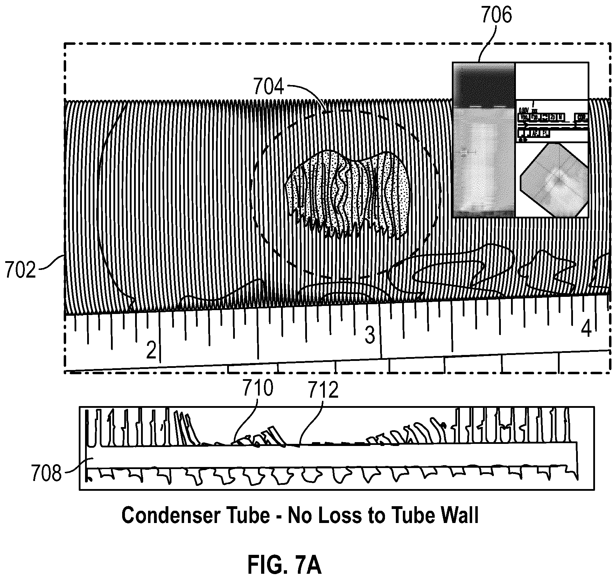

Figs. 7A-7C illustrate example heat exchanger tubes with structural damage.
Fig. 7A illustrates an example condenser tube with no loss to tube wall.

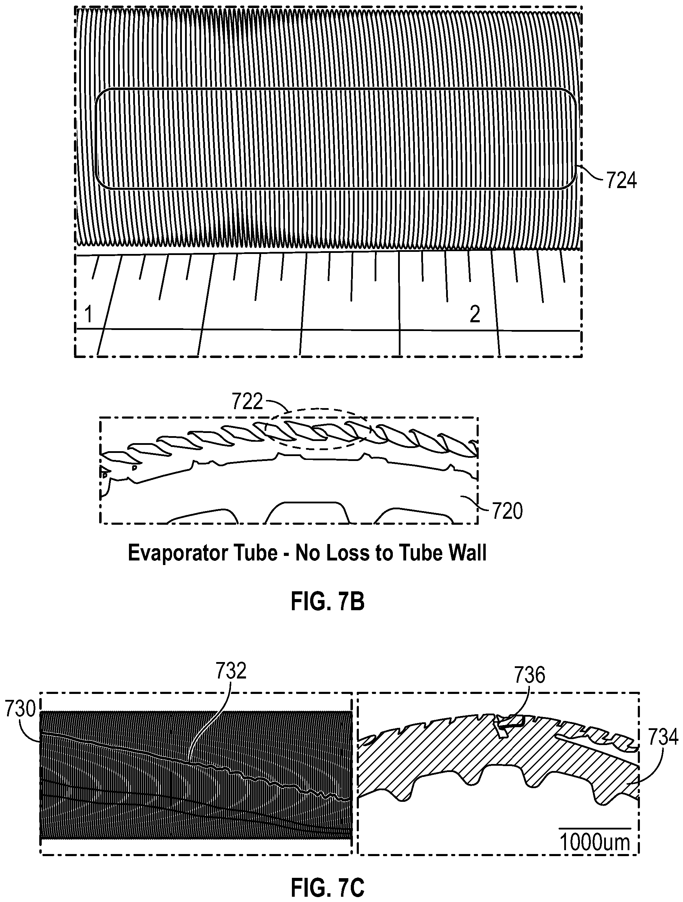

Fig. 7B illustrates an example evaporator tube with no loss to tube wall.
Fig. 7C illustrates an example heat exchanger tube with a defect of Defect type - Zipper Crack, defect depth - 25% into tube wall.

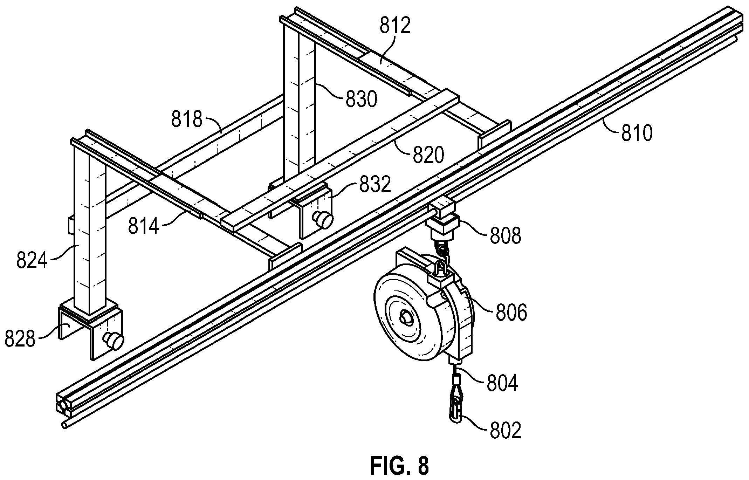

Fig. 8 illustrates a tool fixture with a test probe, as suitable for various embodiments.

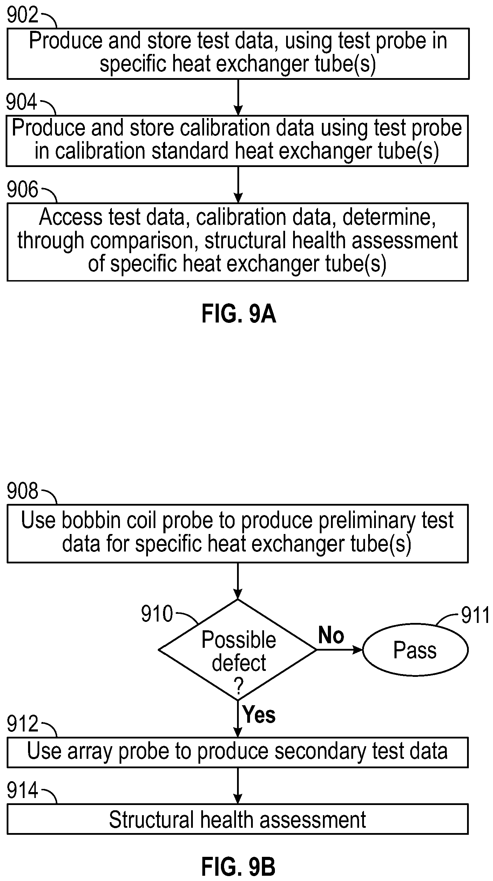

Fig. 9A illustrates a flow diagram for a method of non-destructive testing of heat exchanger tubing, in an embodiment.
Fig. 9B illustrates a further flow diagram of a method for some embodiments, featuring a bobbin coil and an array probe.

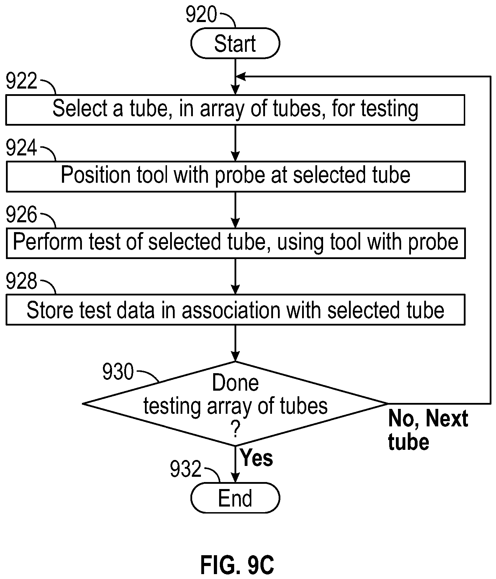

Fig. 9C illustrates a further flow diagram of a method for some embodiments, featuring an array of tubes for testing.

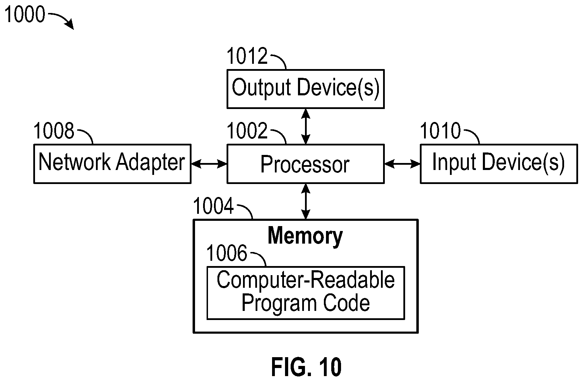

Fig. 10 illustrates control circuitry, according to some example implementations of the present disclosure.

### DETAILED DESCRIPTION

Various embodiments of a system, components of a system, and method of operation of a system, for non-destructive testing of heat exchanger tubing are presented herein. Some embodiments are specifically applicable to heat exchanger tubing in water-cooled climate products, including condenser tubes and evaporator tubes. Embodiments address technological problems arising in heat exchangers, and manufacturing, monitoring and servicing thereof, as further described below in various examples. A calibration standard, which may be embodied in a calibration standard heat exchanger tube, is used in various embodiments.

One embodiment includes a calibration standard for eddy current testing of non-ferromagnetic tubular products used in water-cooled climate products. The new calibration standard, in one example, is a calibration standard heat exchanger tube made from the same testing subject material alloy as other heat exchanger tubes, and has a combination of defects (e.g., intentionally induced or otherwise known) that enables the technician(s) to characterize many types of defects found in a non-ferromagnetic tubular product with enhanced surface at both inside and outside. The same calibration standard (e.g., specific calibration standard tube(s)) can be used throughout the life of the main product to monitor the progress of any potential defects or structural integrity in general. The defects, which may be etched, mechanically, or otherwise introduced on this special calibration standard, may be specific to specific products.

Structural quality of non-ferromagnetic tubular products is a far-reaching problem in the water-cooled chiller and related industrial heat exchange applications. Customers and manufacturers of such equipment have tried several methodologies to enhance the quality and availability of tubular materials used in their machines to meet the life of their products. The examples disclosures herein describe improvements to optimize the Eddy Current technology process.

Challenges in monitoring the life of tubular products include variations in techniques (inspection procedures), personal experience, differences in signal interpretation skills, equipment, and calibration standards used while testing the subject material. The human element aspect of non-destructive testing enlarges the subjectivity bandwidth, and leaves room for significant variance in test results and responsive actions. While such specific gaps can be addressed by training to some degree, there are other particular gaps that may be targeted and improved. As mentioned above, one of the key challenges in this field is the "discrepancy in used calibration standards", which provides a target improvement.

In some embodiments, a calibration standard (e.g., a calibration standard heat exchanger tube) is used primarily to characterize all identified anomalies by using known defects etched into the calibration standard. Each of the known defects may be classified as acceptable or unacceptable based on whether the known defect is understood to have a material impact on the performance of a heat exchanger tube. Industrial practitioners may use a similar (but not identical) type of alloy material and several different types of standards to characterize such anomalies and end up with different interpretations. This is primarily due to the unavailability of a same material sample as used inside the heat exchanger or the unavailability of the same standard used during primary baseline testing in the factory.

Calibration standards can vary largely based on original product design (e.g. internal or external surface treatments, such as finning), material alloy used, defect design differences etc. In order to eliminate this variation, in this disclosed process, a new calibration standard was developed. In various embodiments, the new calibration standard, e.g., calibration standard heat exchanger tube(s), is more closely related to a specific heat exchanger tube to be tested and compared, than to a generic tube, in terms of structural characteristics, e.g., tube type, material, surface treatment, and/or specific defects, etc. For example, a generic tube as may have been used in past testing, may have been of generic material, and not of like kind to a specific heat exchanger tube to be tested. A generic tube may not have had specific, intentional defects as may be expected in the field or in manufacturing. For example a calibration standard heat exchanger tube may be made from the same, potentially the exact same, testing subject material alloy and surface treatment as specific heat exchanger tube(s) to be tested, and may have a special combination of defects that enables the technicians to characterize many types of defects found in a non-ferromagnetic tubular product with enhanced surface at both inside and outside. Such a special combination of defects arranged on a heat exchanger tube may include unacceptable wall damage and acceptable surface damage. The same calibration standard can be used throughout the life of the main product to monitor the progress of any potential defects or structural integrity in general. In some embodiments, the specific defects that are intentionally, deliberately placed in the calibration standard heat exchanger tube(s) are generated by trial and error, and/or potentially by consulting technicians in this field. In some examples, they are based on existing tube utilized in the field with acceptable performance levels.

In an embodiment, the calibration standard heat exchanger tube, or multiple calibration standard heat exchanger tubes, feature:
1. 27" Custom Combo Standard made from the same material of subject test material
2. Unique combinations of 15 defects placed to characterize identified anomaly.
3. Defects are as follows.
   a. 10% Interior diameter ("ID") groove
   b. 25 and 50% ID round bottom pits
   c. 100% through wall hole
   d. 60% Outside diameter ("OD") flat bottom hole
   e. 4 - 20% OD flat bottom holes, spaced 90 degrees apart circumferentially.
   f. 10% OD groove with outside fin removal
   g. 0% OD wear scar, 180 degrees with outside fin removal only
   h. 30% OD spiral groove at 1.5" pitch and 400 degrees around
   i. 25 and 50% OD flats
   j. 20 and 50% OD circumferential notches 50 degrees around
   k. 20 and 40% OD axial notches 0.250" axial length
4. Unique packaging to protect the longevity of the calibration standard used during production.

In some examples more or less of these features are utilized, and it is understood that the values may be adjusted, potentially based, for example, on the tubes being tested.

Eddy Current Testing (ECT) is a method of Non-Destructive Testing (NDT) that is used to provide information, such as unanticipated and/or preventative conditions that affect the reliability and operation costs of equipment. This form of inspection is critical and is widely performed on non-ferromagnetic tubular material products that are installed in commercial and industrial water-cooled chillers. Non-ferromagnetic tubular products are, in some examples, the most critical (or a very critical) components in a climate control product other than compressor technology utilized in the same.

For further context, the efficiency of the chiller is often largely related to the type of non-ferromagnetic tubular products, and as a result, this information may be considered proprietary to the chiller manufacturer. Such products are typically designed with utmost precision and showcase high end conventional engineering efforts.

One of the primary purposes of such non-ferromagnetic tubular products is to provide controlled energy transfer (typically heat transfer) between working fluids within a climate product. A desired transfer rate can be accomplished but it depends on several geometric features of the product along with material alloy. The geometric features of such products are often designed in such a way as to have maximum surface area that enhances the convection process of heat transfer. The manufacturing process, depending on the particular design of geometric features could introduce several non-conformances resulting in failures.

In some examples, the raw material for tubular products is produced using a draw down process and the final products are generated by using a mandrel on the inside and a fin disk assembly on the outside. During the manufacturing process, transportation, and installation, several defects can be introduced into the tubular products as shown below but not limited to:
*1. Metal Loss from tube wall*
*2. Ferromagnetic Dusting*/*Debris*/*Deposit*
*3. Split*/ *Bent Fin along Tube OD*/*ID*
*4. Small Dent, tube ID is smaller than 5% of nominal ID.*
*5. Large Dent, tube ID is larger than 5% of nominal ID.*
*6. Obstruction. No examination can be performed due to a possible bent tube end.*
*7. Restricted. Probe unable to acquire a 100%full-length inspection of the tube.*
*8. Chatter: An indication caused by the tube manufacturing process, characterized by lone areas of horizontal motion.*
*9. Inaccessible: Indicates a Tube unable to be tested past the Tube Sheet.*
*10. Corrosion: Formed by acidic conditions present within the chiller*/*heat exchanger, between the tube OD and shell ID.*
*11. Permeability Variation. Flaw-Like indications* (*foreign material) that give false Eddy Current signals.*
*12. Micro Inclusion, micro-level material voids that can develop into additional, more serious indications such as Lap Seams. These voids are often smooth and hard to characterize.*
*13. Outside Micro Pitting, micro-level pitting indications on OD that can develop into more serious indications.*
*14. Inside Micro Pitting, micro-level pitting indications on ID that can develop into more serious indications.*
*15. (Ferro) Magnetic "Writing"-Associated with ferromagnetic debris forcibly moving through the tube ID, leaving trace amounts of ferromagnetic material in the ID tube wall.*
*16. Lap Seam* - *Indication that begins as an inclusion in the raw metal billet before being drawn out in the extrusion process, creating overlapping layers. Progress from the ID to the OD can occur if left unimpeded.*
*17. Zipper Crack* - *Indication that begins as an inclusion at the surface on the raw metal billet before being drawn out in the extrusion process and created as a crack when the applied forces of the Finning Operation are performed on the tube OD. Progress from the OD to the ID can occur if left unimpeded.*
*18. Circumferential Crack* - *Also called a Transverse Crack; Indication that runs in-line with the Eddy Current Field and is virtually undetectable with the Differential Test and shows unique signal characteristics on the X-Axis Test.*
*19. Stress Crack* - *Indication that appears in multitudes within a short span of distance, typically penetrating through the tube to various depths.*
*20. Stress Corrosion Crack* - *Stress Crack Indications that correspond with corrosion.*
*21. Longitudinal Crack* - *An Indication that runs along the length of the tube, displaying a long and unique signal characteristic on both Differential and X-Axis Tests*

The significance of product integrity confirmation is typically critical for climate products. For example, any inter-fluid leak between the refrigeration side and water side will immediately fail the climate machine. In addition, the material wall thickness of tubular products discussed here may range from 0.025" to 0.035". Any loss of material larger than 12% (0.03") is generally considered unacceptable.

One of the most effective methods to identify a reject in non-ferromagnetic tubular products is a type of non-destructive testing method called Eddy Current testing. The test typically needs to be conducted in accordance with ASME (American Society of Mechanical Engineers) BPVC (Boiler and Pressure Vessel Code) Section V, Mandatory Appendix II (Eddy Current Examination of Non-ferromagnetic Heat Exchanger Tubing). Testing of a given tube may be done after manufacture of the tube, after installation of the tube in a component, after installation of tube and component in a complete assembly, after installation of the complete assembly at a customer site and/or at intervals during the lifespan of the complete installed assembly at the customer site. Typically, in order for the end customer to get 100% pass acceptable tubular products in a final machine, a test happens after the tubular products are installed inside the climate product (pressure vessel such as evaporator and condenser) and prior to shipping the pressure vessels from the manufacturer. In this way, substantially all possibilities of defect caused from manufacturer, transportation, material handling, installation, pressure vessel assembly etc. have occurred. By contrast, if the test is happening once the customer receives the end-product, the possibility of getting replacement tubular products will be minimal and might affect the overall project commissioning plan. Also, the end customer will not have the ability to re-test and re-qualify the vessel to meet ASME BPVC VIII requirements.

Overall, a preferred practice is to perform a baseline Eddy Current test at the manufacturer's site where the tubular products are produced, then a second baseline Eddy Current test at the equipment (Heat Exchanger) manufacturer and continue to do so annually at the customer site.

Unfortunately, the test is often subjective, and it is common for tests to end up with different or incorrect results from multiple tests. A major contributing factor to this discrepancy is the use of non-standard calibration standards or simply different types of calibration standards made from unknown alloys that could be close enough but not exactly the same alloy. Along with material, the enhancements (tube fins) on water-cooled climate products are specially designed and often proprietary to the tube manufacturer. There are often significant variations among these enhancement designs which will prevent test techniques from reaching optimum results.

In order to solve this technological hurdle, the solution as described below in various embodiments is to create a unique calibration standard made from the same material/sample used in the tubular product. The design of this calibration standard should include a specific set of carefully placed defects that will optimize the characterization process of anomalies.

Equal or more amount of volumetric loss of material from the tube wall in comparison to the calibration standard may be a cause of rejection, as may various further factors. An analyst may compare actual defect signal to a combination of available response characteristics to determine if the anomaly is an actual defect or not.

The quality and quantity of this combination of available responses may matter. This may vary depending on a) sample to actual geometric and design similarities. It may be recommended, for test data and calibration data, to use the same b) frequency channels, c) fill factor (OD of the probe to ID of the tube), d) coil arrangements, e) number of coils, f) types of defects in calibration standard as expected in the field or in manufacturing, etc.

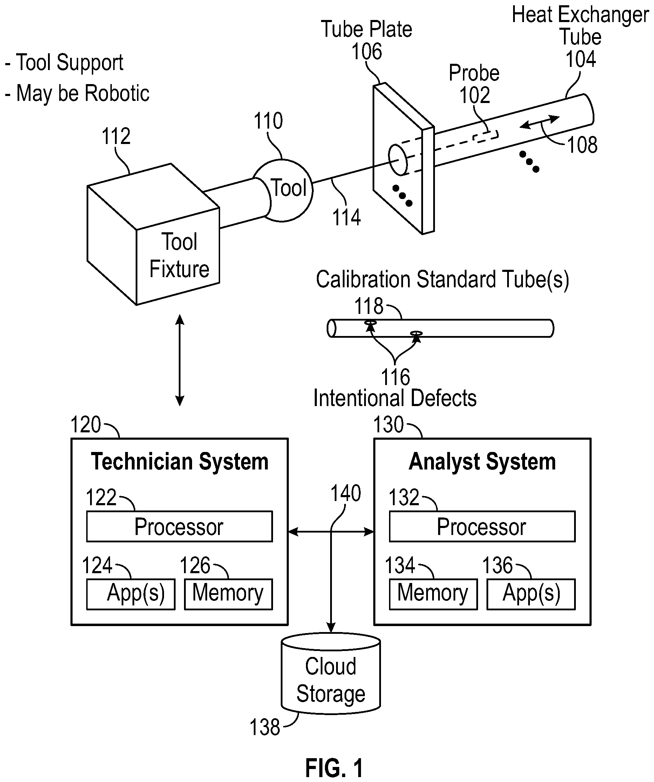

Fig. 1 illustrates an embodiment of a system, and embodiments of components of a system, for non-destructive testing of heat exchanger tubing. A tool fixture 112, which may be a tool support or may be robotic in embodiments, positions a tool 110 that inserts a probe 102 into a specific heat exchanger tube 104 to be tested. Alternatively, a probe may be operated external to the specific heat exchanger tube 104, to test. Or, a specific heat exchanger tube may be moved relative to a probe, or vice versa. Here, the heat exchanger tube 104 is shown mounted to a tube plate 106 such as may be found in heat exchangers, typically with many tubes mounted to the tube plate (not shown, but see Figs. 6A-6D).

Measurement data from the probe 102 moving 108 in the heat exchanger tube 104, typically from the tool 110 pushing and/or pulling the probe 102 via an extensible, retractable instrumentation cable 114, is communicated to the technician system 120. There, the processor 122, memory 126, and one or more apps 124 may locally store and/or process the measurement data from the probe 102, and communicate the measurement data or processed data therefrom to cloud storage 138 via a network 140.

Relatedly, gathered measurement data from probing the calibration standard tube(s) 118 is likewise communicated to and stored in cloud storage 138, or may be stored in the technician system 120 or the analyst system 130, in various embodiments. For example, the same or another technician or robotics fixture could operate the same tool fixture 112, tool 110, and probe 102, or another of these, under controlled conditions, gathering measurement data from the probe 102 or another probe (preferably identical or nearly so within appropriate tolerances) moving in a related calibration standard tube 118. The calibration standard tube 118 (or multiples thereof) has arranged, intentional defects 116, so that the measurement data from probing the calibration standard tube 118 represents such defects and can be used for analysis. More specifically, the measurement data from probing the calibration standard tube 118 with intentional defects 116 is used for comparison with measurement data from the selected heat exchanger tube 104 under test.

The use of cloud storage 138 permits use of an analyst system 130, at a remote or other location not required to be (but can be in some embodiments) in the same location as the technician system 120 and the selected heat exchanger tube 104 under test. That is, remote analysis is enabled through the use of cloud storage 138. The analyst system 130, with processor 132, memory 134 and one or more apps 136, accesses the measurement data, or processed data, from the selected heat exchanger tube 104 under test, through network 140 connected to cloud storage 138 and storage therein. This enables a remote analyst to compare measurement data from probing the selected heat exchanger tube 104, with possible defects, and measurement data from probing the calibration standard tube 118, with intentional defects 116.

In one embodiment, the tool fixture 112 is a tool support, and relieves the user from physical strain in holding the tool 110. For example, the tool fixture 112 may be manually positionable (e.g., see Fig. 8) by a user, for locating the tool 110 and probe 102 appropriately to a specific heat exchanger tube 104. In one embodiment, the tool fixture 112 is robotic, including for example a robotic positioner, robotic arm, etc., and local or integrated robotic control which may communicate with or be part of technician system 120, for robotic location and positioning of the tool 110 and probe 102.

In one embodiment, the tool 110 has a machine-controlled pull-rate for the test probe 102. For example, the tool may push the probe 102 into the selected heat exchanger tube 104, by extending the instrumentation cable 114 to which the probe 102 is attached at the end. The tool may pull the probe 102 through the selected heat exchanger tube 104, by retracting the instrumentation cable 114 to which the probe 102 is attached at the end. One, the other, or both of these may be at a controlled rate, which may be constant or variable in various embodiments, and this may provide accurate positioning of the probe 102 and correlation of test data to probe position for analysis.

In one embodiment, more than one probe is used. For example, probes may be of various types, some of which are more sensitive, some are less sensitive. A less sensitive type of probe may be used initially, followed by use of a more sensitive type of probe. Examples of probe types that are operated internal to the tube for testing include bobbin probe, which may be less sensitive, array probe, which may be more sensitive, etc. Examples of probe types that are operated external to the tube for testing include surface probe, which may have more sensitive or less sensitive variants, encircling coil or doughnut probe, which operates outside the tube, e.g., encircling the tube and may have more sensitive or less sensitive variants, etc. It is envisioned one type of surface probe may operate internal to the tube, another type of surface probe may operate external to the tube, and various combinations of these may be used. It is envisioned one type of probe may employ an emitter external to the tube in a sensor internal to the tube, and one type of probe may employ an emitter internal to the tube and a sensor external to the tube. Various further probes and probe types may be employed singly, multiply, and variously in keeping with the teachings herein.

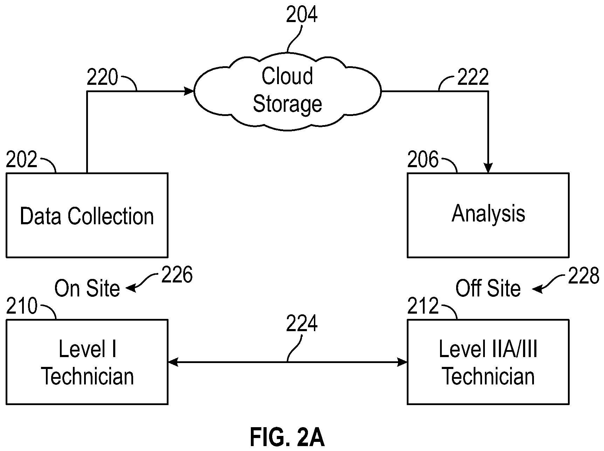

Fig. 2A illustrates aspects of non-destructive testing of heat exchanger tubing, for embodiments. Data collection 202, assisted or performed by a technician 210, potentially a low level or less experienced technician (e.g., a level I technician), may be done on site 226 with the selected heat exchanger tube(s) being tested. Analysis 206, assisted or performed by another technician 212, potentially a higher level or more experienced technician (e.g., a level IIA or level III technician), may be done off site 228, e.g., at a remote from the location of the heat exchanger tube(s) being tested. Communication between the systems and related processes, e.g., involving data transfer, may be performed through storage 204, potentially cloud storage, and network communication 220 from data collection 202 to storage 204, and network communication 222 from storage 204 to analysis 206. There may also be a communication path 224 between the technician 210, the lower level technician (e.g., a level I technician), and technician 212, the higher level technician (e.g., the level IIA or level III technician) for example for notifications, alerts, questions and answers, instructions, reports, etc. Other communication paths and processes may also be utilized.

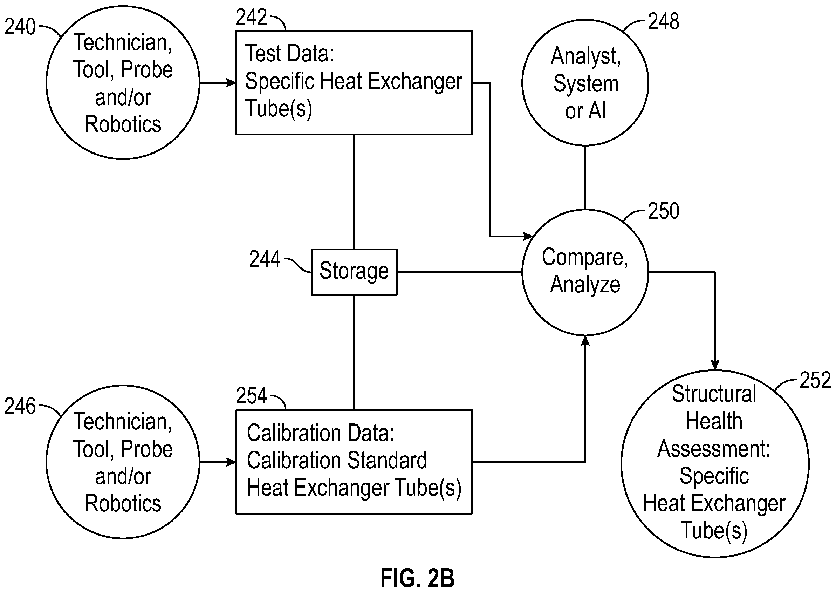

Fig. 2B illustrates a process diagram showing the role of test data 242 from non-destructive testing of specific heat exchanger tubes and calibration data 254 from non-destructive testing of calibration standard heat exchanger tube(s), for various embodiments, including Fig. 2A. One entity 240, which may include technician, tool, probe and/or robotics, test system, etc., gathers test data 242, which is for specific heat exchanger tube(s). One entity 246, which may include the same or another technician, tool, probe and/or robotics, test or calibration system, etc., gathers calibration data 254, which is for one or more specific calibration standard heat exchanger tubes. Test data 242 and calibration data 254 are stored in storage 244, which may be cloud storage, local storage(s) or distributed storage in various embodiments, and accessed in storage 244. One entity 248, which may include an analyst, a system, or AI in some further embodiments, performs a compare, analyze process 250 on the test data 242 and the calibration data 254, as accessed through the storage 244. From this, the entity 248, which may include the same or another analyst, system, or AI in some further embodiments, performs a structural health assessment 252, of the specific heat exchanger tube(s).

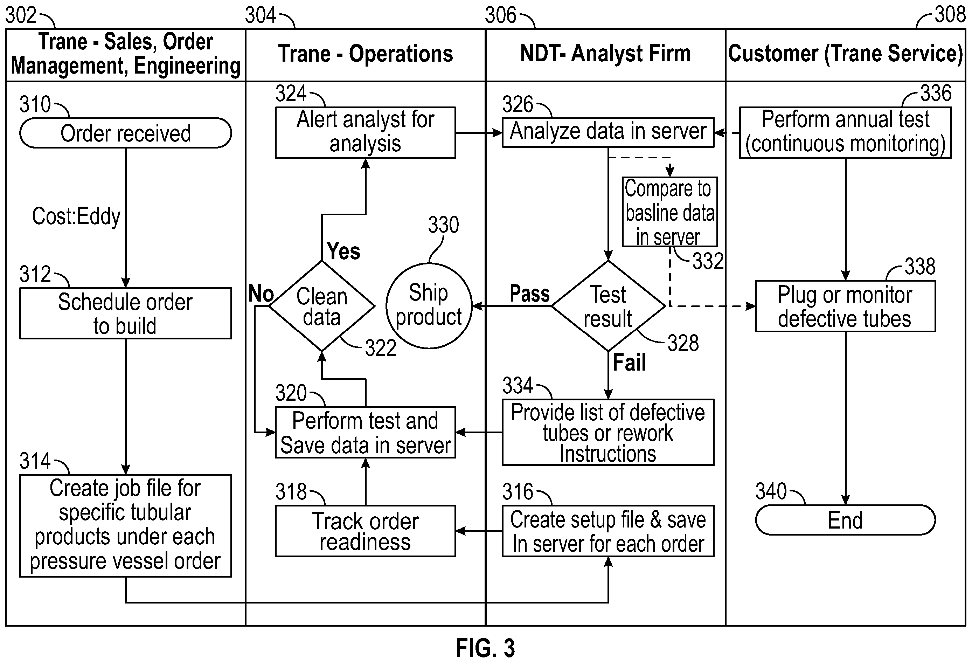

Fig. 3 illustrates a flow diagram of a method for non-destructive testing of heat exchanger tubing, in an embodiment. Actions are illustrated as being performed in or by various personnel groups 302, 304, 306, 308 that may belong with or be independent and operate in cooperation with a parent company. It should be appreciated that further embodiments with various personnel groups, various equipment thereof, and various associations, are readily developed in keeping with the teachings herein. Various embodiments of a calibration standard, calibration standard tube(s), or calibration standard heat exchanger tubes, may be used, as may various embodiments of processes, methods, and systems as described herein, in the performance of the various actions illustrated in Fig. 3, as further discussed below.

Actions 310, 312, 314 may be performed by or through the sales, order management and engineering personnel group 302, which may be associated with a parent company. In an action 310, an order is received. The order may be for heat exchanger tubes, components that include heat exchanger tubes, a heat exchanger system (e.g., refrigerant, HVAC, water-cooled chiller, industrial installation), etc.

In an action 312, the order to build is scheduled. This may be an order to build or install (e.g. in manufacturing or at a customer site) heat exchanger tubes, components, an entire system or subsystem, etc.

In an action 314, a job file is created for specific tubular products under each pressure vessel order. Formatting, and contents of the job file, etc. are readily understood in the context of the order to build from action 312. Flow proceeds to the action 316.

Actions 316, 326, 328, 332, 334 may be performed by or through the NDT (nondestructive testing) analyst firm personnel group 306, which may be independent of and operating in cooperation with a parent company, in various embodiments. For example, the analyst firm personnel group 306 may be external to manufacturing and external to installed sites. Alternatively, the analyst firm personnel group 306 may be in-house, in some embodiments. In an action 316, a set up file is created and saved in the server for each order. Flow proceeds to the action 318.

Actions 318, 320, 322, 324, 330 may be performed by or through the operations personnel group 304, which may be associated with a parent company. In an action 318, order readiness is tracked.

In an action 320, test is performed and data is saved in the server. This test and resultant data may use embodiment(s) of process, method, component(s), system(s) and/or apparatus as described herein, see Figs. 1-2A and 4A-9B.

In an action 322, it is determined whether there is clean data. If the answer is no, flow returns to action 320, to perform subsequent test and save data. If the answer is yes, flow proceeds to action 324.

In an action 324, the analyst is alerted for analysis. Flow proceeds to action 326.

In an action 326, data in a server is analyzed. This analysis, and the type of data and location and storage of data may use embodiment(s) of process, method, component(s), system(s) and/or apparatus as described herein, see Figs. 1-2A and 4A-9B. Flow takes a parallel advance to actions 328 and 332.

In the action 328, the test result from the action 326 is determined to be pass or fail. If the test result is "passed", flow proceeds to the action 330, to ship product. If the test result is "fail", flow proceeds to the action 334.

In the action 330, responsive to "passed", product is shipped. In the action 334, responsive to "fail", the analyst firm personnel group 306 is to provide a list of defective tubes or rework instructions, to operations personnel group 304 as flow passes to action 320 (see above). Such a list of defective tubes or rework instructions could be based on data, and analysis, that may use embodiment(s) of process, method, component(s), system(s) and/or apparatus as described herein, see Figs. 1-2A and 4A-9B.

In the action 332, following the action 326, the data and analyzed data are compared to baseline data in the server. More specifically, data from testing the tube(s) is compared to baseline data from testing tube(s), for example testing calibration standard heat exchanger tube(s) in various embodiments, or testing against previously saved production test data from testing the tube(s), etc. This may use embodiment(s) of process, method, component(s), system(s) and/or apparatus as described herein, see Figs. 1-2A and 4A-9B. Flow proceeds to the action 338.

Actions 336, 338, 340 may be performed through or by customer service personnel group 308, which may be associated with a parent company. In the action 338, defective tubes are plugged or monitored. This action 338 is based on the analysis and comparison from the actions 326, 332, and is understood may involve transfer of related data from analyst firm personnel 306 to customer service personnel group 308, thus making use of embodiment(s) of process, method, component(s), system(s) and/or apparatus as described herein, see Figs. 1-2A and 4A-9B.

Further, customer service personnel groups 308 may perform action 336, perform annual test (continuous monitoring), leading also to action 338, to plug or monitor defective tubes.

Process end is at action 340. It should be appreciated that the above actions and process may be ongoing, continuous or at intervals over the lifespan of specific tube(s), heat exchanger tube(s), and/or heat exchanger system(s).

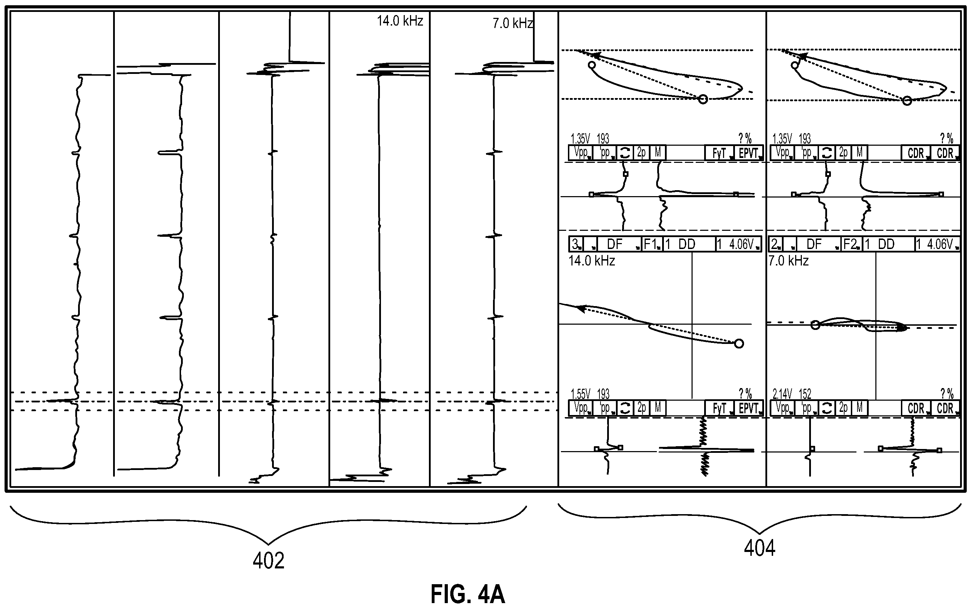

Fig. 4A illustrates an example of bobbin coil data. The illustration is of such data in graphical form, e.g., waveforms, two-dimensional X Y plots, etc. and it is appreciated that the data may be stored, rendered, visualized, analyzed, etc. in various further forms such as tabulated, 3D rendered and manipulable for viewing, virtual reality rendered, etc.

Bobbin coil data 402 is illustrated in two-dimensional format, for example signal probe versus probe position for multiple specified frequencies. These may be channels for bobbin coil data, from a bobbin coil probe that is inserted in and moved through a range of positions within a tube, e.g., a heat exchanger tube.

Bobbin coil data 404 is illustrated in two-dimensional format, for example XY cross-section frequency response at a specified bobbin coil probe position within a tube, indicated by cursor position in the lower data traces at potential defect locations.

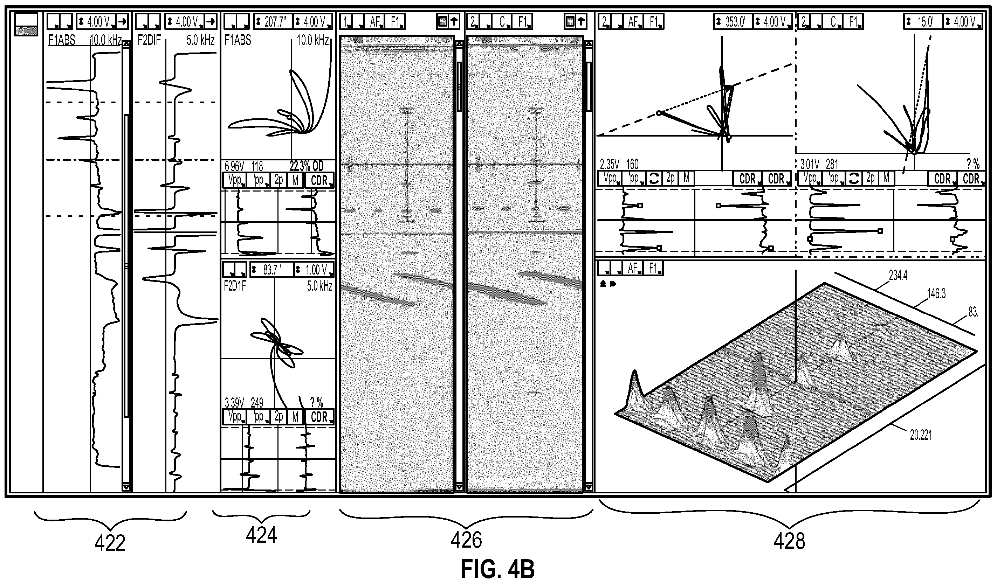

Fig. 4B illustrates an example of array probe data and bobbin coil data. The illustration is of such data in graphical form, e.g., waveforms, plots, maps, two-dimensional projections of three-dimensional views, etc. and it is appreciated that the data may be stored, rendered, visualized, analyzed, etc. in various further forms such as tabulated, 3D rendered and manipulable for viewing, virtual reality rendered, etc.

Bobbin coil data or array probe data 422 is illustrated in two-dimensional format, for example signal amplitude versus probe position for two specified frequencies. Bobbin coil data or array probe data 424 is illustrated in two-dimensional format, for example signal frequency response as lobes in XY format cross-section at a particular probe position indicated below in amplitude versus probe position plots. Bobbin coil data or array probe data 426 is illustrated in XY maps, and may be shading or color-coded to represent signal amplitude or intensity. Bobbin coil data or array probe data 428 is illustrated in two-dimensional lobes at top, with a two-dimensional projection of three-dimensional rendering below, in which potential defects are shown or indicated as signal peaks, which may also be shaded or color-coded, etc. As seen, the resolution of test data results is expected to vary based on the selected probe, and therefore the probe should be consistent between use on the tube under test and use on the calibration standard.

Figs. 5A, 5B, 5C and 5D illustrate examples of heat exchanger tubing and probes, suitable for embodiments. Further embodiments are not limited to these examples and are readily devised in keeping with the teachings herein.

Fig. 5A illustrates finned tubing 506. Fins 502 may be on an interior in some embodiments, or an exterior, in some embodiments, of finned tubing 506. Fins 504 may differ from fins 502 and may be on an interior in some embodiments, or an exterior, in some embodiments of finned tubing 506. It should be appreciated that damaged fins may be considered an unacceptable defect, in some embodiments, or may be considered not a defect, or an acceptable defect, if tube wall thickness is unaffected, in some embodiments.

Fig. 5B illustrates internally enhanced tubing with defect 512. The illustrated view is a surface of tubing 510, with the defect 512 illustrated as displacement or deformation of surface features. It is understood the defect 512 is detectable through analysis of data from a probe, as described herein in various embodiments.

Fig. 5C illustrates a bobbin coil probe 518. This example bobbin coil probe has multiple probe coils 522, 524 and an instrumentation cable 520. The instrumentation cable 520 may have a dual function of signal communication with the probe coils 522, 524, and mechanical communication with the probe coils 522, 524, for movement and positioning of the bobbin coil probe 518, e.g., within a tube. Multiple frequencies of signaling may be supported by the multiple probe coils 522, 524. There may be multiple sizes of probes available, for differing inside diameters of tubes, or for tubes with or without deposits or ranges of deposits and thicknesses thereof, which may affect probe travel and/or signal coupling.

Fig. 5D illustrates an array probe 530. This example of an array probe has multiple probe coils 532, 534, and may also have an instrumentation cable (not shown but readily understood). Multiple frequencies of signaling may be supported by the multiple probe coils 532, 534. One or more of the probe coils 532, 534 may be an array coil, which supports highly directional signaling and/or a greater number of channels of signaling in comparison and contrast to the bobbin coil probe 518.

Figs. 6A and 6B illustrate tube sheet diagrams of a condenser tube sheet and an evaporator tube sheet, showing locations of heat exchanger tubes in an example installation. A tube sheet may also be referred to as a tube plate (see Fig. 1), and vice versa. In some examples, these tube sheet diagrams may be provided on a display or other medium.

Fig. 6A illustrates a tube sheet diagram of a condenser tube sheet. In a heat exchanger system, the condenser tubes are located in the condenser of the heat exchanger (see also Figs. 6C and 6D). The tube sheet diagram is a representation of the locations or positions of the heat exchanger tubes of the condenser, and may be represented in data in various formats so as to allow tracking of heat exchanger tubes through installation, testing, repair (e.g., plugging), replacement, etc. For example, one of the tubes 602 is indicated as okay or "passed", one of the tubes 604 is indicated as having a defect but not needing repair at this time, multiple tubes 606 are indicated as having defect and needing repair, and one of the tubes 608 is indicated as recently replaced, or alternatively needing replacement, (e.g., with a new tube).

Fig. 6B illustrates a tube sheet diagram of an evaporator tube sheet. In a heat exchanger system, the evaporator tubes are located in the evaporator of the heat exchanger ((see also Figs. 6C and 6D). The tube sheet diagram is a representation of the locations or positions of the heat exchanger tubes of the evaporator, and may be represented in data in various formats so as to allow tracking of heat exchanger tubes through installation, testing, repair (e.g., plugging), replacement, etc. For example, one of the tubes 620 is indicated as okay or "passed", multiple tubes 622 are indicated as having defect and needing repair, and one of the tubes 624 is indicated as recently replaced, or alternatively needing replacement, (e.g., with a new tube).

Fig. 6C illustrates a perspective view of an example chiller, showing a condenser tube sheet 640 and an evaporator tube sheet 642, to which heat exchanger tubes are located in situ in the apparatus, as suitable for embodiments. Heat exchanger tubes for the condenser are within the condenser chamber 644, which has the condenser tube sheet 640 as an end plate (heat exchanger tubes not shown, but see Fig. 6A). Heat exchanger tubes for the evaporator are within the evaporator chamber 646, which has the evaporator tube sheet 642 as an end plate (heat exchanger tubes not shown, but see Fig. 6B).

Fig. 6D illustrates an end view of an example chiller (see Fig. 6C), showing a condenser tube sheet 680 and an evaporator tube sheet 684, as suitable for embodiments. In order to test heat exchanger tubes in situ in the apparatus (e.g., a heat exchanger or subassembly thereof), prior to shipping, or in situ in the apparatus after installation at a customer site (e.g., a complete chiller installation), a suitable probe is inserted into an aperture 682 of the condenser tube sheet 680 or an aperture 686 of the evaporator tube sheet 684 and on into the selected heat exchanger tube that resides on the other side of the condenser tube sheet 680 or evaporator tube sheet 684, within the condenser or evaporator. There is thus no need to remove a heat exchanger tube from a heat exchanger, for such testing in accordance with embodiments.

Figs. 7A-7C illustrate example heat exchanger tubes with structural damage.

Fig. 7A illustrates an example condenser tube 702 with no loss to tube wall. A damage region 704 shows bent, crushed or otherwise damaged fins on the exterior of the condenser tube 702, as may have occurred through physical contact or impact with an object. In this example, a cross-section longitudinal view (lower part of the drawing) shows the tube wall 708 has no loss in thickness, even in damage regions 710, 712 that have bent, crushed or even removed finning. Rendered test data 706 (see also Figs. 4A and 4B) from probing the example condenser tube 702 is analyzed to determine the health assessment of the condenser tube 702, in various embodiments. For example, signal data from a specific probe could be analyzed, through comparison with signal data from a probe of a calibration standard heat exchanger tube, to determine that there is no loss to the tube wall of this selected condenser tube 702, and the health assessment is that the condenser tube 702 has some damage but does not need repair or replacement.

Fig. 7B illustrates an example evaporator tube with no loss to tube wall. A damage region 724 shows bent or displaced fins along a line segment, as may have occurred through a scraping contact with an object. In this example, a cross-section transverse view (lower part of the drawing) shows the tube wall 720 has no loss in thickness, even in damage region 722 with displaced finning. In this example, signal data from a specific probe could be analyzed, through comparison with signal data from a probe of a calibration standard heat exchanger tube, to determine that there is no loss of the tube wall of this selected condenser tube, and the health assessment is that the condenser tube has some damage but does not need repair or replacement.

Fig. 7C illustrates an example heat exchanger tube 730 with a defect of Defect type - Zipper Crack, defect depth - 25% into tube wall. The exterior view, on the left in the drawing, shows a diagonal damage region 732, which to external inspection may appear similar to the damage regions 724 of Fig. 7B. However, in this example, a cross-section transverse view (right side of the drawing) shows the tube wall 734 has loss, in the form of a zipper crack 736 that would not be visible from external inspection. In this example, signal data from a specific probe could be analyzed, through comparison with signal data from a probe of a calibration standard heat exchanger tube, to determine that there is loss of the tube wall in this selected condenser tube, and the health assessment is that the condenser tube has damage and does need repair or replacement.

Fig. 8 illustrates a tool fixture with a test probe 802, as suitable for various embodiments. In various embodiments, a tool fixture may be an ergonomic fixture, which both positions the tool with test probe and relieves user fatigue that may occur from a user manually holding a tool. The tool fixture, in this embodiment, has brackets or clamps 828, 832 that can be fastened to other fixed, movable or adjustable equipment, and has a sliding rail 810 to which a suitable tool 806 with a test probe 802 can be mounted. Vertical beams 824, 830 have the brackets or clamps 828, 832 and support horizontal beams 814, 812 that may be telescoping or slidable for adjustment. Crossbeams 818, 820 add support and rigidity to the tool fixture. With the tool 806 mounted, by a tool mount 808, to the sliding rail 810, the tool can be moved and positioned along the sliding rail 810. Horizontal beams 814, 812 can be moved in and out. In some embodiments, the vertical beams 824, 830 are telescoping or slidable, for height adjustment of the tool fixture. In some embodiments, the equipment to which the brackets or clamps 828, 834 are attached is adjustable for height. Thus, the tool fixture allows for adjustment of X, Y, Z axis positioning of the tool 806 and support of the tool 806 while the probe 802 is inserted, and moved within a selected tube for testing. For example, the tool fixture could be attached to a wheeled, variable height (e.g., electrical or hydraulic lift) dolly, platform or lift, which is then maneuvered into place, followed by manual adjustment of the tool fixture to align the tool 806 and probe 802, to a selected heat exchanger tube in situ (e.g. in a component, apparatus or on-site installation).

Fig. 9A illustrates a flow diagram for a method of non-destructive testing of heat exchanger tubing, in an embodiment. The method may be practiced using embodiments of equipment, components, systems and processes described herein, and variations thereof. Embodiments may use a calibration standard heat exchanger tube(s), may use cloud storage and/or may use remote analyst(s).

In an action 902, test data is produced and stored, using a test probe in specific heat exchanger tube(s). The production of test data, and storage of same, do not need to be at the same location or at the same time.

In an action 904, calibration data is produced and stored, using a test probe in calibration standard heat exchanger tube(s). This may be done before, during, or after the action 902 and the test data production and storage. The production of calibration data, and storage of same, do not need to be at the same location or at the same time.

In an action 906, test data and calibration data, or processed data therefrom, are accessed. The access may be through cloud storage. Through comparison, a structural health assessment of specific heat exchanger tube(s) is determined. The determination of structural health assessment may be by a remote analyst. In some examples, the process includes using software, a processor, or other device to perform the health assessment. In these examples, the health assessment may be displayed to on a screen (not shown). In some examples, the display shows the various coils that pass or fail the assessment, potentially including a display similar to Figs. 6A and/or 6B.

In a variation, the system detects damage to a tube that prevents probe travel, for example a crushed tube, a bent tube, a wall deflection, etc., and evaluates the tube as defective.

Fig. 9B illustrates a further flow diagram of a method for some embodiments, featuring a bobbin coil and an array probe. The method may be practiced using, within, or as a variation of the method depicted in Fig. 9A, in various embodiments. The method may be practiced using embodiments of equipment, components, systems and processes described herein, and variations thereof. Embodiments may use a calibration standard heat exchanger tube(s), may use cloud storage and/or may use remote analyst(s). Variations of this method may be practiced using a first probe type, for preliminary test data, and a second, more sensitive probe type for secondary test data.

In an action 908, a bobbin coil probe is used to produce preliminary test data for specific heat exchanger tube(s).

In an action 910, it is determined whether there is a possible defect in the specific heat exchanger tube(s), using the bobbin coil preliminary test data. This may be accomplished using actions 902, 904, 906. Or, this may be a variation of actions 902, 906. If the determination in the action 910 is no, flow branches to action 911, pass. If the determination in the action 910 is yes, flow branches to the action 912.

In an action 912, an array probe is used to produce secondary test data.

In an action 914, a structural health assessment is performed, using the secondary test data, or the secondary test data and the preliminary test data, for the specific heat exchanger tube(s). This may be accomplished using actions 902, 904, 906. Or this may be a variation of actions 902, 906.

Fig. 9C illustrates a further flow diagram of a method for some embodiments, featuring an array of tubes for testing. The method may be practiced using various probes, tubes, arrangements and/or assemblies of tubes, systems, users, etc., as disclosed herein in embodiments, and variations thereof. The method may be practiced as part of, or distinct from, various methods described herein in embodiments.

The method has a start 920, proceeding to the action 922. Further, action 922 can be proceeded to from determination action 930, as further described below. In the action 922, a tube is selected, in an array of tubes, for testing. That is, there is an array of tubes, which may be embodied as an arrangement of tubes, an assembly of tubes, a component having tubes, a subsystem or system having tubes, etc., and may be located at a manufacturer site, a testing site, a customer installation site, etc. To start testing, one of the tubes is selected.

In an action 924, a tool with a probe is positioned at the selected tube. Various tools, and various probes, may be suitable. Positioning may be done manually, or through a support structure for the tool, or through an apparatus such as a robotics positioner. Positioning the tool with the probe at the selected tube locates the probe appropriately to begin testing the tube with the probe.

In an action 926, a test of the selected tube is performed, using the tool with the probe. For example, operation of the appropriately positioned tool moves the probe within the tube, which generates test data.

In an action 928, test data, from the action 926, is stored in association with the selected tube. For example, there may be a database with entries of test data for each tested, selected tube, and the database maintains the association and the storage of the test data.

In a determination action 930, it is determined whether to be done, e.g., finished, with testing the array of tubes. If the answer is no, testing is not done, and the next tube should be selected for testing, flow branches back to the action 922, to select another tube in the array of tubes, for testing. If the answer is yes, testing is done, flow proceeds to end 932. In various embodiments, this may be followed by analysis of the test data.

Fig. 10 illustrates the control circuitry 1000, which may be an apparatus, according to some examples of the present disclosure. In some examples, the control circuitry 1000 includes some or all of the technical system 120, and/or the analysis system 130, or any other similar apparatus as described by the present disclosure. In some examples multiple components include control circuitry. For example, the technician system 120 may comprise control circuitry 1000, the analysis system 130 may comprise separate control circuitry 1000, and the cloud storage 138 may also include its own control circuitry. Indeed, in some examples, the control circuitry 1000 may include one or more of each of a number of components such as, for example, a processor 1002 connected to a memory 1004. The processor is generally any piece of computer hardware capable of processing information such as, for example, data, computer programs and/or other suitable electronic information. The processor includes one or more electronic circuits some of which may be packaged as an integrated circuit or multiple interconnected integrated circuits (an integrated circuit at times more commonly referred to as a "chip"). The processor 1002 may be a number of processors, a multi-core processor or some other type of processor, depending on the particular example.

The processor 1002 may be configured to execute computer programs such as computer-readable program code 1006, which may be stored onboard the processor or otherwise stored in the memory 1004. In some examples, the processor may be embodied as, or otherwise include, one or more ASICs, FPGAs or the like. Thus, although the processor may be capable of executing a computer program to perform one or more functions, the processor of various examples may be capable of performing one or more functions without the aid of a computer program.

The memory 1004 is generally any piece of computer hardware capable of storing information such as, for example, data, computer-readable program code 1006 or other computer programs, and/or other suitable information either on a temporary basis and/or a permanent basis. The memory may include volatile memory such as random access memory (RAM), and/or non-volatile memory such as a hard drive, flash memory or the like. In various instances, the memory may be referred to as a computer-readable storage medium, which is a non-transitory device capable of storing information. In some examples, then, the computer-readable storage medium is non-transitory and has computer-readable program code stored therein that, in response to execution by the processor 1002, causes the control circuitry 1000 to perform various operations as described herein, some of which may in turn cause the climate control system to perform various operations.

In addition to the memory 1004, the processor 1002 may also be connected to one or more peripherals such as a network adapter 1008, e.g., for interfacing with a communication bus as described above, one or more input/output (I/O) devices (e.g., input device(s) 1010, output device(s) 1012) or the like. The network adapter is a hardware component configured to connect the control circuitry 1000 to a computer network to enable the control circuitry to transmit and/or receive information via the computer network. The I/O devices may include one or more input devices capable of receiving data or instructions for the control circuitry, and/or one or more output devices capable of providing an output from the control circuitry. Examples of suitable input devices include a keyboard, keypad or the like, and examples of suitable output devices include a display device such as a one or more light-emitting diodes (LEDs), a LED display, a liquid crystal display (LCD), or the like.

The following clauses are statements of embodiments as may be applicable in various combinations.

Clause 1. A method of non-destructive testing of heat exchanger tubing, comprising: using a test probe inserted in a specific heat exchanger tube with machine-controlled testing, producing test data of non-destructive testing of the specific heat exchanger tube; accessing the test data of the non-destructive testing of the specific heat exchanger tube; and determining a structural health assessment of the specific heat exchanger tube using the accessed test data of the non-destructive testing of the specific heat exchanger tube in comparison to calibration data associated with at least one calibration standard heat exchanger tube that is more closely related to the specific heat exchanger tube than to a generic tube, in terms of its structural characteristics. The calibration standard heat exchanger tube may be made from the same material as the specific heat exchanger tube. The same material may be a same material alloy. The material alloy may be non-ferrous. The calibration standard heat exchanger tube may have one or more known defects. The calibration standard heat exchanger tube may have the same surface treatment as the specific heat exchanger tube.

Clause 2. A method of any of the clauses listed herein, further comprising: using cloud-based storage for the test data of the non-destructive testing of the specific heat exchanger tube and the calibration data associated with the at least one calibration-standard heat exchanger tube, wherein accessing comprises accessing the cloud-based storage.

Clause 3. A method of any of the clauses listed herein, wherein using the test probe with machine-controlled testing comprises using robotics to position and operate a tool comprising the test probe.

Clause 4. A method of any of the clauses listed herein, wherein using the test probe with machine-controlled testing comprises using a machine-controlled pull-rate for the test probe.

Clause 5. A method of any of the clauses listed herein, wherein using the test probe comprises: using a tool mounted in an ergonomic fixture, the ergonomic fixture configured to relieve user fatigue and position the test probe; and the tool having a mechanized, controlled pull-rate for the test probe, for the machine-controlled testing.

Clause 6. A method of any of the clauses listed herein, wherein using the test probe, producing the test data, comprises: using a probe of a first probe type inserted in the specific heat exchanger tube to produce preliminary test data; and responsive to preliminary determination that the preliminary test data indicates possible defect in the specific heat exchanger tube, using a probe of a second, more sensitive probe type inserted in the specific heat exchanger tube to produce secondary test data.

Clause 7. A method of any of the clauses listed herein, wherein producing the test data of the non-destructive testing of the specific heat exchanger tube and determining the structural health assessment of the specific heat exchanger tube are performed prior to delivery or installation of the specific heat exchanger tube.

Clause 8. A method of any of the clauses listed herein, wherein: using the test probe, producing the test data of the non-destructive testing of the specific heat exchanger tube, is performed in situ where the specific heat exchanger tube is installed in a component at a first location or installed in a refrigerant system at a second location; and determining the structural health assessment of the specific heat exchanger tube is performed by a remote analyst, wherein the remote analyst is not on site where the specific heat exchanger tube is installed in the component or installed in the refrigerant system.

Clause 9. A method of any of the clauses listed herein, further comprising: arranging a plurality of defects on at least one heat exchanger tube to form the at least one calibration standard heat exchanger tube; and with a same or related test probe inserted in the at least one calibration standard heat exchanger tube with same or related testing, producing the calibration data associated with the at least one calibration standard heat exchanger tube.

Clause 10. A tangible, non-transitory, computer-readable media having instructions thereupon which, when executed by a processor, cause the processor to perform a method wherein test data and calibration data are being used for health assessment of heat exchanger tubes, the method comprising: receiving test data of non-destructive testing of a specific heat exchanger tube, produced using a test probe inserted in the specific heat exchanger tube with machine-controlled testing; storing, in a data storage, the test data of the non-destructive testing of the specific heat exchanger tube; receiving calibration data associated with at least one calibration standard heat exchanger tube that is more closely related to the specific heat exchanger tube than to a generic tube, in terms of its structural characteristics; storing the calibration data from the related non-destructive testing of the at least one calibration standard heat exchanger tube; and supporting accessing the test data of the non-destructive testing of the specific heat exchanger tube in the data storage and the calibration data from the testing of the at least one calibration standard heat exchanger tube, to enable a structural health assessment of the specific heat exchanger tube based on the test data and the calibration data. The calibration standard heat exchanger tube may be made from the same material as the specific heat exchanger tube. The same material may be a same material alloy. The material alloy may be non-ferrous. The calibration standard heat exchanger tube may have one or more known defects. The calibration standard heat exchanger tube may have the same surface treatment as the specific heat exchanger tube.

Clause 11. The tangible, non-transitory, computer-readable media of any of the clauses listed herein, wherein: the data storage comprises cloud-based storage; and wherein the method further comprises performing the structural health assessment of the specific heat exchanger tube based on the test data and the calibration data off-site from the specific heat exchanger tube.

Clause 12. The tangible, non-transitory, computer-readable media of any of the clauses listed herein, wherein the method further comprises: directing robotics to position and operate a tool comprising the test probe, for the machine-controlled testing.

Clause 13. The tangible, non-transitory, computer-readable media of any of the clauses listed herein, wherein the test data of the non-destructive testing of the specific heat exchanger tube comprises preliminary test data using a probe of a first probe type, and secondary test data using a probe of a second, more sensitive probe type.

Clause 14. The tangible, non-transitory, computer-readable media of any of the clauses listed herein, wherein the calibration data from the related non-destructive testing of the at least one calibration standard heat exchanger tube represents a plurality of defects of the at least one calibration standard heat exchanger tube.

Clause 15. A system for non-destructive testing of heat exchanger tubing, wherein the system is to provide test data and calibration data used in health assessment of heat exchanger tubes, the system comprising: at least one memory; and at least one processor coupled to the at least one memory, and arranged to: receive test data of non-destructive testing of a specific heat exchanger tube produced using a test probe inserted in the specific heat exchanger tube; store the test data of the non-destructive testing of the specific heat exchanger tube in a data storage; store calibration data associated with at least one calibration standard heat exchanger tube that is more closely related to the specific heat exchanger tube than to a generic tube, in terms of its structural characteristics; and support accessing the test data of the non-destructive testing of the specific heat exchanger tube in the data storage and the calibration data from the testing of the at least one calibration standard heat exchanger tube, to enable a structural health assessment of the specific heat exchanger tube based on the test data and the calibration data. The calibration standard heat exchanger tube may be made from the same material as the specific heat exchanger tube. The same material may be a same material alloy. The material alloy may be non-ferrous. The calibration standard heat exchanger tube may have one or more known defects. The calibration standard heat exchanger tube may have the same surface treatment as the specific heat exchanger tube.

Clause 16. The system for non-destructive testing of heat exchanger tubing of any of the clauses listed herein, wherein at least the data storage comprises cloud-based storage.

Clause 17. The system for non-destructive testing of heat exchanger tubing of any of the clauses listed herein, further comprising: robotics to position and operate a tool comprising the test probe, for the machine-controlled testing.

Clause 18. The system for non-destructive testing of heat exchanger tubing of any of the clauses listed herein, further comprising: a tool comprising at least one test probe and having a machine-controlled pull-rate for the at least one test probe.

Clause 19. The system for non-destructive testing of heat exchanger tubing of any of the clauses listed herein, wherein the test data of the non-destructive testing of the specific heat exchanger tube comprises preliminary test data using a probe of a first probe type, and secondary test data using a probe of a second, more sensitive probe type.

Clause 20. The system for non-destructive testing of heat exchanger tubing of any of the clauses listed herein, wherein a plurality of defects of the at least one calibration standard heat exchanger tube is represented in the calibration data.

Clause 21. A method for non-destructive testing of heat exchanger tubing, comprising: using a test probe inserted in a specific heat exchanger tube with machine-controlled testing, producing test data of non-destructive testing of the specific heat exchanger tube; accessing the test data of the non-destructive testing of the specific heat exchanger tube; and determining a structural health assessment of the specific heat exchanger tube using the accessed test data of the non-destructive testing of the specific heat exchanger tube in comparison to calibration data associated with at least one calibration standard heat exchanger tube. The calibration standard heat exchanger tube may be more closely related to the specific heat exchanger tube than to a generic tube, in terms of its structural characteristics. The calibration standard heat exchanger tube may be made from the same material as the specific heat exchanger tube. The same material may be a same material alloy. The material alloy may be non-ferrous. The calibration standard heat exchanger tube may have one or more known defects. The calibration standard heat exchanger tube may have the same surface treatment as the specific heat exchanger tube.

Clause 22. The method of Clause 21, further comprising: using cloud-based storage for the test data of the non-destructive testing of the specific heat exchanger tube and the calibration data associated with the at least one calibration-standard heat exchanger tube, wherein accessing comprises accessing the cloud-based storage.

Clause 23. The method of Clause 21 or 22, wherein using the test probe with machine-controlled testing comprises using robotics to position and operate a tool comprising the test probe; and/or wherein using the test probe with machine-controlled testing comprises using a machine-controlled pull-rate for the test probe.

Clause 24. The method of any one of the Clauses 21-23, wherein using the test probe comprises: using a tool mounted in an ergonomic fixture, the ergonomic fixture configured to relieve user fatigue and position the test probe; and/or using a tool having a mechanized, controlled pull-rate for the test probe, for the machine-controlled testing. The tool having a mechanized pull-rate for the test probe may be the tool mounted in an ergonomic fixture.

Clause 25. The method of any one of the Clauses 21-24, wherein using the test probe and producing the test data comprises: using a probe of a first probe type inserted in the specific heat exchanger tube to produce preliminary test data; and responsive to preliminary determination that the preliminary test data indicates a possible defect in the specific heat exchanger tube, using a probe of a second probe type inserted in the specific heat exchanger tube to produce secondary test data. The second probe type may be a more sensitive probe type (e.g., relative to the first probe type).

Clause 26. The method of any one of the Clauses 21-25, wherein producing the test data of the non-destructive testing of the specific heat exchanger tube and determining the structural health assessment of the specific heat exchanger tube are performed prior to delivery or installation of the specific heat exchanger tube.

Clause 27. The method of any one of Clauses 21-25, wherein: using the test probe and producing the test data of the non-destructive testing of the specific heat exchanger tube, is performed in situ where the specific heat exchanger tube is installed in a component at a first location or installed in a refrigerant system at a second location; and determining the structural health assessment of the specific heat exchanger tube is performed by a remote analyst, wherein the remote analyst is not on site at the location where the specific heat exchanger tube is installed in the component or installed in the refrigerant system.

Clause 28. The method of any one of the Clauses 21-27, further comprising: arranging a plurality of defects comprising unacceptable wall damage and acceptable surface damage on at least one heat exchanger tube to form the at least one calibration standard heat exchanger tube; and with a same or related test probe inserted in the at least one calibration standard heat exchanger tube, with same or related testing, producing the calibration data associated with the at least one calibration standard heat exchanger tube.

Clause 29. A tangible, non-transitory, computer-readable medium storing instructions which, when executed by a processor, cause the processor to perform a method comprising: receiving test data of non-destructive testing of a specific heat exchanger tube, produced using a test probe inserted in the specific heat exchanger tube with machine-controlled testing; storing, in a data storage, the test data of the non-destructive testing of the specific heat exchanger tube; storing calibration data associated with testing of at least one calibration standard heat exchanger tube; and supporting accessing the test data of the non-destructive testing of the specific heat exchanger tube in the data storage and the calibration data, to enable a structural health assessment of the specific heat exchanger tube based on the test data and the calibration data. The computer-readable medium may otherwise be referred to as a computer readable media. The method may be a method wherein test data and calibration data are used for health assessment of heat exchanger tubes. The calibration standard heat exchanger tube may be more closely related to the specific heat exchanger tube than to a generic tube, in terms of its structural characteristics. The method may comprise receiving the calibration data. The calibration standard heat exchanger tube may be made from the same material as the specific heat exchanger tube. The same material may be a same material alloy. The material alloy may be non-ferrous. The calibration standard heat exchanger tube may have one or more known defects. The calibration standard heat exchanger tube may have the same surface treatment as the specific heat exchanger tube.

Clause 30. The tangible, non-transitory, computer-readable medium of Clause 29, wherein the instructions are such that the method comprises: receiving the calibration data associated with the testing of at least one calibration standard heat exchanger.

Clause 31. The tangible, non-transitory, computer-readable medium of Clause 29 or 30, wherein the instructions are such that: storing the test data of the non-destructive testing of the specific heat exchanger tube in a data storage comprises storing the test data in a data storage comprising cloud-based storage; and the method further comprises performing the structural health assessment of the specific heat exchanger tube based on the test data and the calibration data, off-site from the specific heat exchanger tube.

Clause 32. The tangible, non-transitory, computer-readable medium of any one of Clauses 29-31, wherein the instructions are such that the method further comprises: directing robotics to position and operate a tool comprising the test probe, for the machine-controlled testing.

Clause 33. The tangible, non-transitory, computer-readable medium of any one of Clauses 29-32, wherein the test data of the non-destructive testing of the specific heat exchanger tube comprises preliminary test data using a probe of a first probe type, and secondary test data using a probe of a second probe type. The second probe type may be a more sensitive probe type (e.g., relative to the first probe type).

Clause 34. The tangible, non-transitory, computer-readable medium of any one of Clauses 30-34, wherein the calibration data is from related non-destructive testing of the at least one calibration standard heat exchanger tube, and/or wherein the calibration data represents a plurality of defects of the at least one calibration standard heat exchanger tube.

35. A system for non-destructive testing of heat exchanger tubing, wherein the system is to provide test data and calibration data used in health assessment of heat exchanger tubes, the system comprising: at least one processor coupled to at least one memory, the memory comprising the tangible, non-transitory, computer-readable medium of any one of Clauses 29-34; robotics to position and operate a tool comprising the test probe, for the machine-controlled testing; and/or a tool comprising at least one test probe and having a machine-controlled pull-rate for the at least one test probe. The calibration standard heat exchanger tube may be made from the same material as the specific heat exchanger tube. The same material may be a same material alloy. The material alloy may be non-ferrous. The calibration standard heat exchanger tube may have one or more known defects. The calibration standard heat exchanger tube may have the same surface treatment as the specific heat exchanger tube.

Detailed illustrative embodiments are disclosed herein. However, specific functional details disclosed herein are merely representative for purposes of describing embodiments. Embodiments may, however, be embodied in many alternate forms and should not be construed as limited to only the embodiments set forth herein.

It should be understood that although the terms first, second, etc. may be used herein to describe various steps or calculations, these steps or calculations should not be limited by these terms. These terms are only used to distinguish one step or calculation from another. For example, a first calculation could be termed a second calculation, and, similarly, a second step could be termed a first step, without departing from the scope of this disclosure. As used herein, the term "and/or" and the "/" symbol includes any and all combinations of one or more of the associated listed items.

As used herein, the singular forms "a", "an" and "the" are intended to include the plural forms as well, unless the context clearly indicates otherwise. It will be further understood that the terms "comprises", "comprising", "includes", and/or "including", when used herein, specify the presence of stated features, integers, steps, operations, elements, and/or components, but do not preclude the presence or addition of one or more other features, integers, steps, operations, elements, components, and/or groups thereof. Therefore, the terminology used herein is for the purpose of describing particular embodiments only and is not intended to be limiting.

It should also be noted that in some alternative implementations, the functions/acts noted may occur out of the order noted in the figures. For example, two figures shown in succession may in fact be executed substantially concurrently or may sometimes be executed in the reverse order, depending upon the functionality/acts involved.

With the above embodiments in mind, it should be understood that the embodiments might employ various computer-implemented operations involving data stored in computer systems. These operations are those requiring physical manipulation of physical quantities. Usually, though not necessarily, these quantities take the form of electrical or magnetic signals capable of being stored, transferred, combined, compared, and otherwise manipulated. Further, the manipulations performed are often referred to in terms, such as producing, identifying, determining, or comparing. Any of the operations described herein that form part of the embodiments are useful machine operations. The embodiments also relate to a device or an apparatus for performing these operations. The apparatus can be specially constructed for the required purpose, or the apparatus can be a general-purpose computer selectively activated or configured by a computer program stored in the computer. In particular, various general-purpose machines can be used with computer programs written in accordance with the teachings herein, or it may be more convenient to construct a more specialized apparatus to perform the required operations.

A module, an application, a layer, an agent or other method-operable entity could be implemented as hardware, firmware, or a processor executing software, or combinations thereof. It should be appreciated that, where a software-based embodiment is disclosed herein, the software can be embodied in a physical machine such as a controller. For example, a controller could include a first module and a second module. A controller could be configured to perform various actions, e.g., of a method, an application, a layer or an agent.

The embodiments can also be embodied as computer readable code on a tangible non-transitory computer readable medium. The computer readable medium is any data storage device that can store data, which can be thereafter read by a computer system. Examples of the computer readable medium include hard drives, network attached storage (NAS), read-only memory, random-access memory, CD-ROMs, CD-Rs, CD-RWs, magnetic tapes, and other optical and non-optical data storage devices. The computer readable medium can also be distributed over a network coupled computer system so that the computer readable code is stored and executed in a distributed fashion. Embodiments described herein may be practiced with various computer system configurations including hand-held devices, tablets, microprocessor systems, microprocessor-based or programmable consumer electronics, minicomputers, mainframe computers and the like. The embodiments can also be practiced in distributed computing environments where tasks are performed by remote processing devices that are linked through a wire-based or wireless network.

Although the method operations were described in a specific order, it should be understood that other operations may be performed in between described operations, described operations may be adjusted so that they occur at slightly different times or the described operations may be distributed in a system which allows the occurrence of the processing operations at various intervals associated with the processing.

In various embodiments, one or more portions of the methods and mechanisms described herein may form part of a cloud-computing environment. In such embodiments, resources may be provided over the Internet as services according to one or more various models. Such models may include Infrastructure as a Service (IaaS), Platform as a Service (PaaS), and Software as a Service (SaaS). In IaaS, computer infrastructure is delivered as a service. In such a case, the computing equipment is generally owned and operated by the service provider. In the PaaS model, software tools and underlying equipment used by developers to develop software solutions may be provided as a service and hosted by the service provider. SaaS typically includes a service provider licensing software as a service on demand. The service provider may host the software, or may deploy the software to a customer for a given period of time. Numerous combinations of the above models are possible and are contemplated.

Various units, circuits, or other components may be described or claimed as "configured to" or "configurable to" perform a task or tasks. In such contexts, the phrase "configured to" or "configurable to" is used to connote structure by indicating that the units/circuits/components include structure (e.g., circuitry) that performs the task or tasks during operation. As such, the unit/circuit/component can be said to be configured to perform the task, or configurable to perform the task, even when the specified unit/circuit/component is not currently operational (e.g., is not on). The units/circuits/components used with the "configured to" or "configurable to" language include hardware--for example, circuits, memory storing program instructions executable to implement the operation, etc. Reciting that a unit/circuit/component is "configured to" perform one or more tasks, or is "configurable to" perform one or more tasks, is expressly intended not to invoke 35 U.S.C. 112, sixth paragraph, for that unit/circuit/component. Additionally, "configured to" or "configurable to" can include generic structure (e.g., generic circuitry) that is manipulated by software and/or firmware (e.g., an FPGA or a general-purpose processor executing software) to operate in manner that is capable of performing the task(s) at issue. "Configured to" may also include adapting a manufacturing process (e.g., a semiconductor fabrication facility) to fabricate devices (e.g., integrated circuits) that are adapted to implement or perform one or more tasks. "Configurable to" is expressly intended not to apply to blank media, an unprogrammed processor or unprogrammed generic computer, or an unprogrammed programmable logic device, programmable gate array, or other unprogrammed device, unless accompanied by programmed media that confers the ability to the unprogrammed device to be configured to perform the disclosed function(s).

The foregoing description, for the purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the embodiments and its practical applications, to thereby enable others skilled in the art to best utilize the embodiments and various modifications as may be suited to the particular use contemplated. Accordingly, the present embodiments are to be considered as illustrative and not restrictive, and the invention is not to be limited to the details given herein, but may be modified within the scope and equivalents of the appended claims.

## Claims

1. A method for non-destructive testing of heat exchanger tubing, comprising:
using a test probe inserted in a specific heat exchanger tube with machine-controlled testing, producing test data of non-destructive testing of the specific heat exchanger tube;
accessing the test data of the non-destructive testing of the specific heat exchanger tube; and
determining a structural health assessment of the specific heat exchanger tube using the accessed test data of the non-destructive testing of the specific heat exchanger tube in comparison to calibration data associated with at least one calibration standard heat exchanger tube.

2. The method of claim 1, further comprising:
using cloud-based storage for the test data of the non-destructive testing of the specific heat exchanger tube and the calibration data associated with the at least one calibration-standard heat exchanger tube, wherein accessing comprises accessing the cloud-based storage.

3. The method of claim 1 or 2, wherein using the test probe with machine-controlled testing comprises using robotics to position and operate a tool comprising the test probe; and/or
wherein using the test probe with machine-controlled testing comprises using a machine-controlled pull-rate for the test probe.

4. The method of any one of the preceding claims, wherein using the test probe comprises:
using a tool mounted in an ergonomic fixture, the ergonomic fixture configured to relieve user fatigue and position the test probe; and/or
using a tool having a mechanized, controlled pull-rate for the test probe, for the machine-controlled testing.

5. The method of any one of the preceding claims, wherein using the test probe and producing the test data comprises:
using a probe of a first probe type inserted in the specific heat exchanger tube to produce preliminary test data; and
responsive to preliminary determination that the preliminary test data indicates a possible defect in the specific heat exchanger tube, using a probe of a second probe type inserted in the specific heat exchanger tube to produce secondary test data.

6. The method of any one of the preceding claims, wherein producing the test data of the non-destructive testing of the specific heat exchanger tube and determining the structural health assessment of the specific heat exchanger tube are performed prior to delivery or installation of the specific heat exchanger tube.

7. The method of any one of claims 1-5, wherein:
using the test probe and producing the test data of the non-destructive testing of the specific heat exchanger tube, is performed in situ where the specific heat exchanger tube is installed in a component at a first location or installed in a refrigerant system at a second location; and
determining the structural health assessment of the specific heat exchanger tube is performed by a remote analyst, wherein the remote analyst is not on site at the location where the specific heat exchanger tube is installed in the component or installed in the refrigerant system.

8. The method of any one of the preceding claims, further comprising:
arranging a plurality of defects comprising unacceptable wall damage and acceptable surface damage on at least one heat exchanger tube to form the at least one calibration standard heat exchanger tube; and
with a same or related test probe inserted in the at least one calibration standard heat exchanger tube, with same or related testing, producing the calibration data associated with the at least one calibration standard heat exchanger tube.

9. A tangible, non-transitory, computer-readable medium storing instructions which, when executed by a processor, cause the processor to perform a method comprising:
receiving test data of non-destructive testing of a specific heat exchanger tube, produced using a test probe inserted in the specific heat exchanger tube with machine-controlled testing;
storing, in a data storage, the test data of the non-destructive testing of the specific heat exchanger tube;
storing calibration data associated with testing of at least one calibration standard heat exchanger tube; and
supporting accessing the test data of the non-destructive testing of the specific heat exchanger tube in the data storage and the calibration data, to enable a structural health assessment of the specific heat exchanger tube based on the test data and the calibration data.

10. The tangible, non-transitory, computer-readable medium of claim 9, wherein the instructions are such that the method comprises:
receiving the calibration data associated with the testing of at least one calibration standard heat exchanger.

11. The tangible, non-transitory, computer-readable medium of claim 9 or 10, wherein the instructions are such that:
storing the test data of the non-destructive testing of the specific heat exchanger tube in a data storage comprises storing the test data in a data storage comprising cloud-based storage; and
the method further comprises performing the structural health assessment of the specific heat exchanger tube based on the test data and the calibration data, off-site from the specific heat exchanger tube.

12. The tangible, non-transitory, computer-readable medium of any one of claims 9-11, wherein the instructions are such that the method further comprises:
directing robotics to position and operate a tool comprising the test probe, for the machine-controlled testing.

13. The tangible, non-transitory, computer-readable medium of any one of claims 9-12, wherein the test data of the non-destructive testing of the specific heat exchanger tube comprises preliminary test data using a probe of a first probe type, and secondary test data using a probe of a second probe type.

14. The tangible, non-transitory, computer-readable medium of any one of claims 10-13, wherein the calibration data is from related non-destructive testing of the at least one calibration standard heat exchanger tube, and/or wherein the calibration data represents a plurality of defects of the at least one calibration standard heat exchanger tube.

15. A system for non-destructive testing of heat exchanger tubing, wherein the system is to provide test data and calibration data used in health assessment of heat exchanger tubes, the system comprising:
at least one processor coupled to at least one memory, the memory comprising the tangible, non-transitory, computer-readable medium of any one of claims 9-14;
robotics to position and operate a tool comprising the test probe, for the machine-controlled testing; and/or
a tool comprising at least one test probe and having a machine-controlled pull-rate for the at least one test probe.
